# EUROPEAN PATENT APPLICATION

(11) **EP 1 797 799 A2**
(43) Date of publication of application: **20.06.2007**
(21) Application number: 06256454.7
(22) Date of filing: 19.12.2006
(51) Int. Cl.: A47J 27/21

(54) **Liquid heating vessels and controls and components therefor**

(30) Priority: 19.12.2005 GB 0525790
(71) Applicant: STRIX LIMITED, Ronaldsway, Isle of Man IM9 2RG (GB)
(72) Inventor: Scott, Michael James, Isle of Man IM3 2AU (GB); Fenna, Iain, Peel, Isle of Man IM5 1WA (GB)
(74) Representative: Samuels, Adrian James

(57) **Abstract**

A liquid heating vessel comprises main heating means 200 arranged to heat water in the vessel to boiling and thereafter to be automatically de-energized and secondary heating means 202 for maintaining water in the vessel at a temperature at or below boiling wherein the vessel comprises a single manually operable actuator 48,50;148,150 for energising said main heating means and also for de-energising said secondary heating means.

The control employs leaf springs which comprise a root region 26 for mounting the spring and a narrower, free tip region 28, said spring having two stable curved positions such that it is moveable between said positions by application of a force to the concave face in the tip region or to the convex face in the root region.

## Description

This invention relates to controls for controlling and protecting liquid heating vessels, particularly those for boiling water, and to vessels incorporating such controls and components suitable for such controls.

There is a growing demand in the market for water boiling vessels which offer additional functionality beyond simply heating the water to boiling. One popular feature is the ability to keep the water at a temperature either around or below boiling after it has been boiled initially. This is especially true for Asian markets since it is common practice to boil water and then to keep it hot for long periods in order to allow beverages to be prepared on demand.

It is an object of the invention to provide a convenient appliance with such a function and when viewed from a first aspect the present invention provides a liquid heating vessel comprising main heating means arranged to heat water in the vessel to boiling and thereafter to be automatically de-energized and secondary heating means for maintaining water in the vessel at a temperature at or below boiling wherein the vessel comprises a single manually operable actuator for energising said main heating means and also for de-energising said secondary heating means.

The invention also extends to a control arrangement, preferably provided by an integrated control unit, for a liquid heating vessel having main heating means for heating water to boiling and secondary heating means for maintaining water at a temperature at or below boiling, said control arrangement being arranged to de-energise the main heating means automatically after boiling of the water, wherein the control arrangement comprises a single manually operable actuator for energising the main heating means and also for de-energising said secondary heating means.

Thus it will be seen by those skilled in the art that in accordance with the invention a single manually operable actuator-such as a lever, knob or the like - can be used both to set the vessel to boil water and to switch off the appliance while water is being kept warm/boiling after being brought to boiling. This is advantageous as it minimises production costs whilst enhancing design freedom and user convenience.

Preferably the manual actuator is operable in opposite directions to energise the main heating means and de-energise the secondary heating means respectively. In some preferred embodiments the actuator has two unstable positions corresponding to energising the main heating means and de-energising the secondary heating means respectively, with a stable position preferably between the two unstable positions. In other preferred embodiments the actuator may have just one unstable position. For example one of the stable positions could be arranged to indicate that water in the vessel had boiled.

The actuator could be rotary or sliding but is preferably pivoting.

There is a wide variety of possibilities for the mechanism behind the actuator to give the operation set out in accordance with the invention. The mechanism could be part-electronic or even purely electronic but preferably it is completely mechanical. Even then the skilled person will immediately envisage several ways of implementing the specified functions all of which are intended to be incorporated within the scope of the invention. However, the Applicant has devised a particularly advantageous component which can be used, amongst a host of other possible uses, in implementing the first aspect of the invention.

According to another invention disclosed herein there is provided a leaf spring comprising a root region for mounting the spring and a narrower, free tip region, said spring having two stable curved positions such that it is moveable between said positions by application of a force to the concave face in the tip region or to the convex face in the root region.

In accordance with this invention if such a leaf spring is held by the root region it can be moved between "up" and "down" inclinations by pressing on the surface of the spring in the appropriate direction in either the root or tip region.

The root and tip regions are separated by the central portion of the spring which includes the maximum deflection of the curved profile. The spring is preferably elongate, i.e. having the axis joining its root and tip regions longer than the its width normal to this axis, but no particular shape should be inferred. Depending on the particular curvature of the shape either the root or tip region could extend more than half the length of the spring.

By coupling the leaf spring to an electrical contact, or more preferably having the leaf spring itself acting as the contact, the spring's movement may be used in a bistable switching mechanism. Thus in preferred embodiments the leaf spring is adapted to act as an electrical contact. This could be, for example, by coating the leaf spring or a portion thereof with a suitably conducting layer, such as silver, or it could be attaching a separate contact member onto the leaf spring. Preferably the leaf spring comprises a relatively narrow protruding portion mounting or forming the electrical contact.

The bistable nature of the leaf spring contact makes it ideal for use in the controls set forth in the first aspect of the invention since it means that a switch contact can be left open or left closed by single respective presses on the actuator. Two such leaf springs can therefore conveniently give the described functionality of energising a main heater and de-energising a secondary heater when acted on by a suitably configured lever or a pair or coupled levers.

Leaf springs in accordance with the foregoing invention can be made from a suitably shaped piece of sheet metal by doming it in opposite directions. For example, if the spring blank is first domed by pressing it against a suitably curved mandrel, it is then domed in the opposite direction - e.g. by turning over the piece and pressing it against the same mandrel. It has been found that by carrying out this double doming, pretension is created for both concave and convex curved configurations which give rise to the characteristics of a spring in accordance with the invention. Thus it is preferred that the spring comprises a laminar blank, which is domed in two opposite directions. Moreover, the invention extends to a method of making a spring comprising providing a laminar blank, pressing said blank in a first direction against a curved forming means and thereafter pressing said blank in a second direction, opposite said first direction, against said curved forming means or a further curved forming means.

Preferably the leaf spring is domed by equal amounts in the two opposite directions. Preferably, it has a curvature in each direction which is at least part spherical. Preferably it is curved through an angular extent (i.e. the radii of curvature have an included angle) of less than 90°, more preferably less than 60° and most preferably less than 45°.

Any suitable resilient material or combination of materials may be used for the leaf spring. Preferably a spring copper alloy is employed such as beryllium-copper, although other suitable materials will be apparent to those skilled in the art.

In preferred embodiments of the leaf spring of the invention, the root region is wider than the tip region. The tip region preferably comprises or includes a relatively narrow finger portion e.g. maintaining or forming a contact as mentioned previously. The leaf spring preferably includes a central cut-out portion. Advantageously the cut-out portion predominantly occupies a central region of the leaf spring. This is advantageous in reducing the amount of force necessary to snap the spring to its opposite configuration. Most preferably the cut-out is approximately oval in shape.

It has been found that leaf springs in accordance with the invention have the advantageous feature whereby if the spring is mounted in a cantilever fashion by the root region, it may be made to snap to its opposite configuration, with consequent pronounced movement of the tip portion, by applying a force in the root region - e.g. just beyond the directly supported portion. This in itself is advantageous in enhancing freedom of design of the corresponding control arrangement around the spring. Moreover though it has further been found that the tip portion executes a clean "snap" movement, without pre-snap creepage, even where the force applied to the root portion is progressive. This is of benefit where the leaf spring acts as, or serves to mount, one of a pair of electrical switch contacts since it helps to minimise potential problems associated with arcing and contact bounce that can arise when contacts are opened or closed slowly. This means that a progressive force can be used directly on the leaf spring - such as might be provided by a manually operated lever or the like - without the need for a separate over-centre mechanism.

On the other hand the leaf spring may be caused to snap between its two configurations by a force applied at its tip end. This may give some pre-snap creepage. However, such creepage can be ameliorated, for example by arranging for the force acting on the tip end itself to be applied in a snap-action such as might be the case with a snap-acting bimetallic actuator or an over-centre lever mechanism.

A preferred embodiment of the present invention will now be described, by way of example only, with reference to the accompanying drawings in which:
Fig. 1 is perspective view from above of a control unit according to a first embodiment of the invention;
Fig. 2 is a perspective view of the control unit of Fig. 1 from below;
Fig. 3a is a view of a bistable leaf spring in accordance with the invention;
Figs. 3b and 3c are schematic views showing the spring in its two stable positions;
Fig. 4 is a perspective view from above of the main switch component of the control unit;
Fig. 5 is a view similar to Fig. 4 but from below;
Fig. 6 is a view from above of certain other parts of the control unit;
Fig. 7 is a view similar to Fig. 6 from below;
Fig. 8 is a schematic circuit diagram of the control unit when connected to a dual-element electric heater;
Fig. 9 is a perspective view of a further embodiment of the invention from above;
Fig.10 is a view of the embodiment of Fig. 9 from below;
Fig. 11 is a view from above with the housing and other components removed;
Fig. 12 is view similar to Fig. 11 but from below;
Fig. 13 is a view from above of the mount plate and certain other components;
Fig. 14 is view similar to Fig. 13 but from below; and
Fig. 15 is a schematic circuit diagram of the embodiment of Figs. 9 to 14.

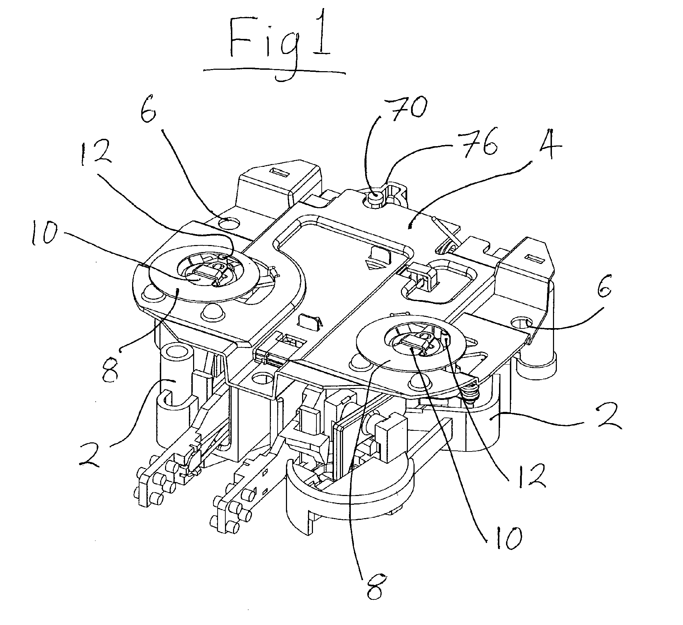

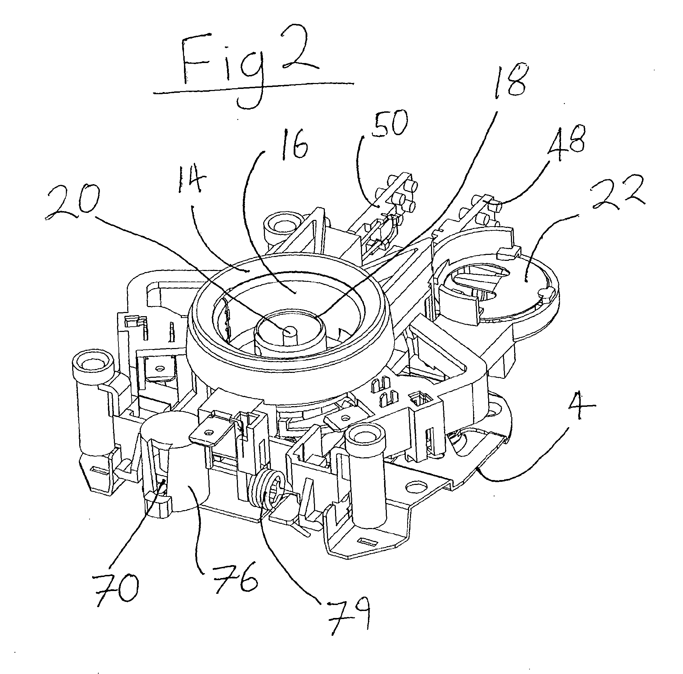

Figs. 1 and 2 are perspective views of a control unit embodying the invention. The control unit is designed to be mounted firmly against the underside of a heater plate which is provided to close an opening in the base of a liquid heating vessel, particularly a water boiling vessel. It is intended for use with a heater comprising two discrete elements of different powers as will be described later.

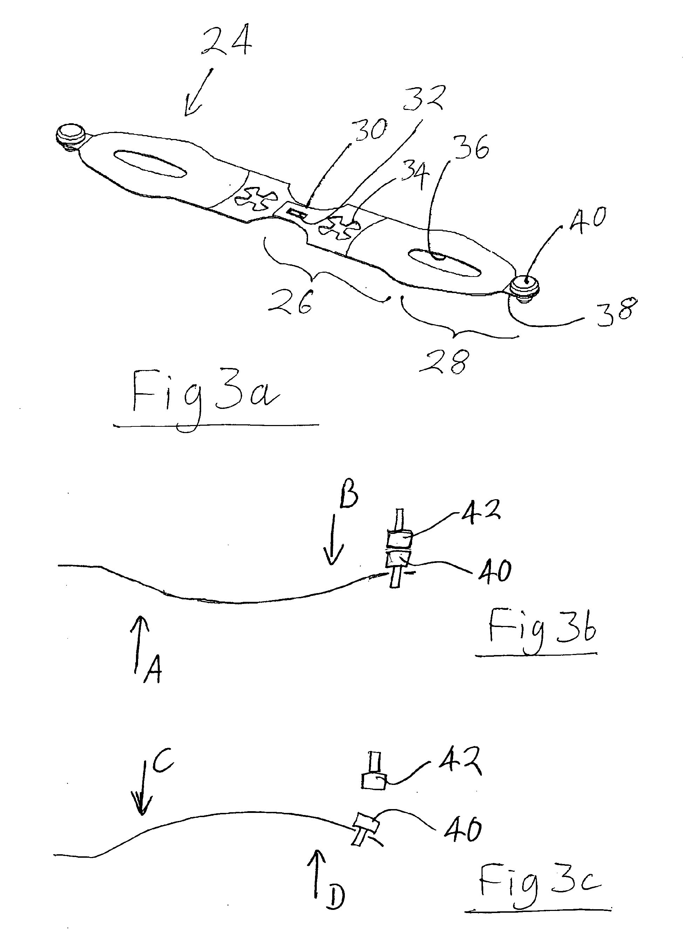

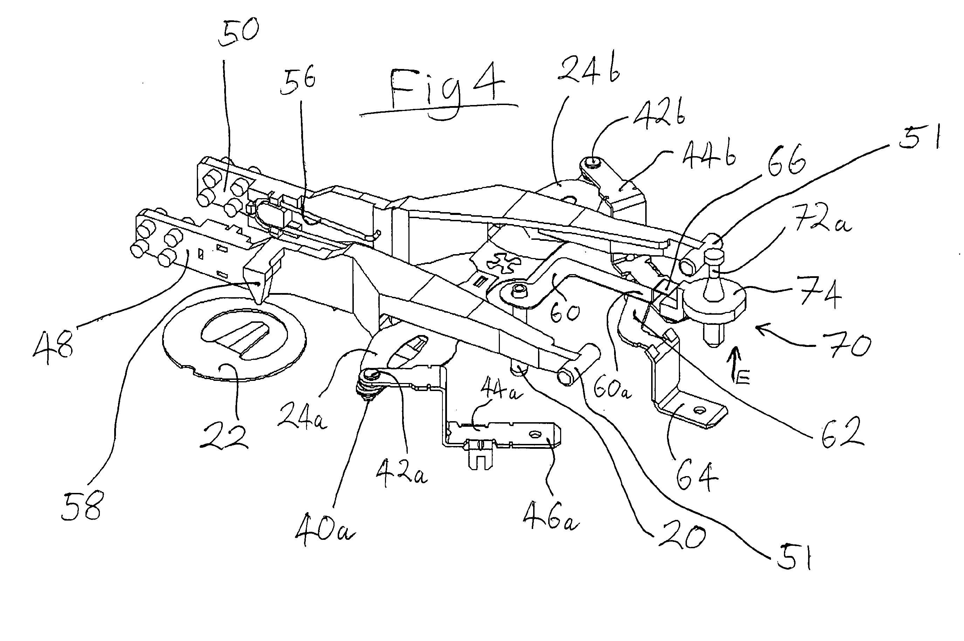

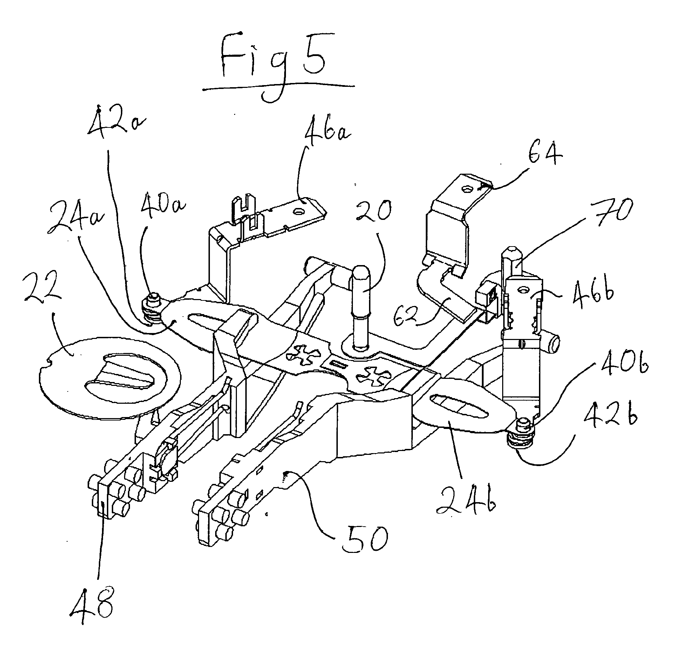

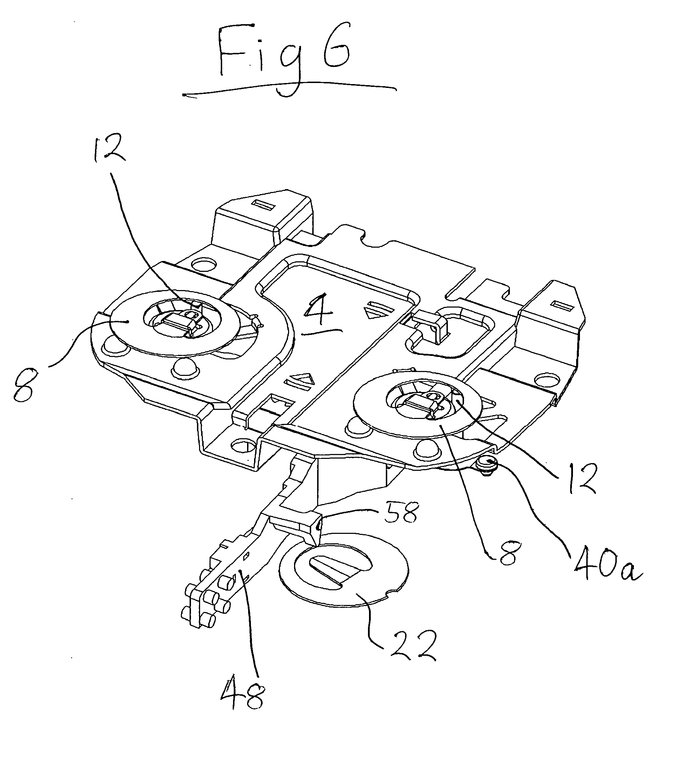

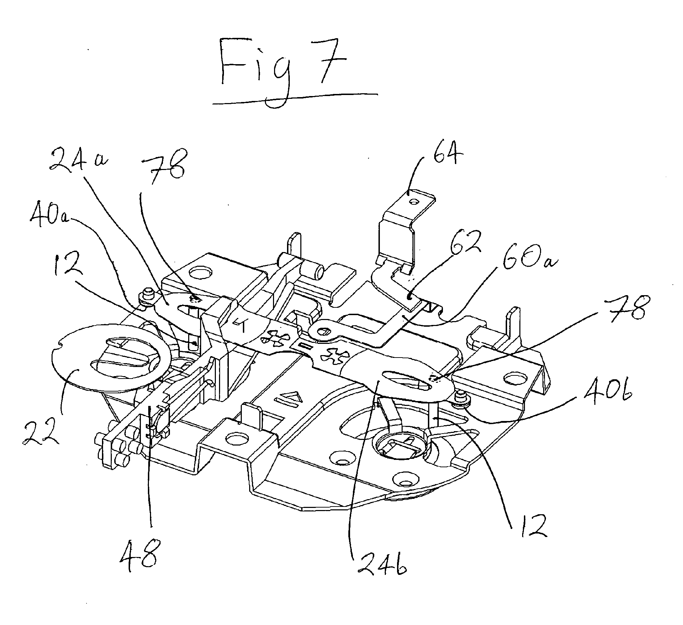

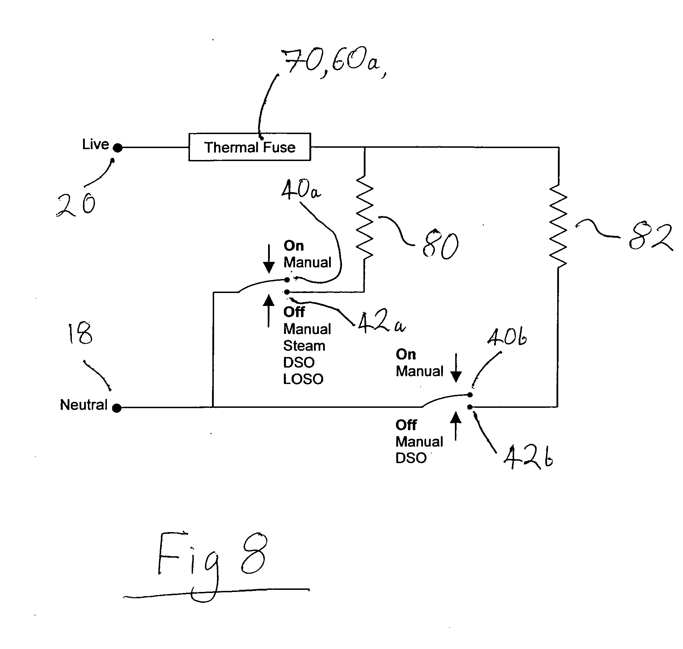

Many of the components of the control unit are referenced in Figures 1 and 2 although they are not described here but rather are described with reference to Figures 3-7 which are partial views of the unit and which permit an easier understanding of the various components. Some components will however be described now with reference to Figures 1 and 2. In particular, the control unit comprises a moulded plastics housing 2 to which is attached a metal, e.g. steel, mounting plate 4. The control unit is mounted to the underside of a plate heater in use by securing the mounting plate 4 to the heater plate by means of screws which pass through holes 6 and into threaded bosses provided on the heater plate. Of course, any other suitable attachment method could be used.

On the exposed upper face of the mounting plate 4 and therefore pressed in use against the heater plate when the control is mounted, are a pair of disc-shaped, snap-acting bimetallic actuators 8. These both have the same or substantially the same nominal operating temperature which is set so that either may operate if the heater should overheat but neither operates during normal operation of the heater. Of course, this is not essential and they could operate at significantly different temperatures, i.e. so that one is designed to operate first for a given temperature.

The bimetals 8 are secured to the mount plate 4 by means of their central tongues 10 so that when either of the bimetals reaches its operating temperature, it will snap to the opposite curvature so as to present an overall convex profile on its outer face, thereby moving the perimeter of the bimetal downwardly with respect to its fixed central tongue 10. The perimeter of each bimetal presses onto respective push rods 12 which act on bistable leaf springs as will be described later. Looking at Fig. 2, the main feature which may be seen is an integrally formed 360° connector comprising a moulded plastics housing 14, around the inside wall of which is provided an annular earth terminal 16; a concentric metal annular neutral terminal 18 and a central metal live pin 20.

The features thus far described are also to be found on the Applicants' current U-Series of controls for underfloor heaters which are very well known in the art and which are described for example in WO 95/34187. As will be described below however, there are a number of important differences between these, now standard, control units and the embodiment of the invention which will be described herein.

One difference to note is that although of similar configuration, the 360° connector 14-20 provided integrally with the control unit is smaller than that provided on the U-Series of controls and therefore does not accommodate the Applicants' standard P72 connector. Rather, it couples with a smaller version of this connector which is described in greater detail in our co-pending application no. GB 0518339.7.

Also visible in Fig. 2 is a third snap-acting bimetallic actuator 22 which is exposed on the underside of the control rather than on the upper face. It has an operating temperature of a few degrees lower than 100°C such that it will operate when it comes into contact with steam generated from boiling water. It will therefore be referred to hereinafter as a steam bimetal.

Figures 3a to 3c show an important component of the control unit described herein and an embodiment of another aspect of the invention set out herein. What is shown is a pair of bistable leaf springs 24 which are identical and overlap marginally at their root ends. Only one of them is described therefore. It will be seen that the overall spring 24 is elongate. In the longitudinal direction it may broadly be divided into two regions - the root region 26 and the tip region 28. As may be seen from the schematic side profile in Fig. 3b, the root portion is the region of the spring on one side of the point of maximum deflection (the left-hand side in this drawing); and the tip region is the region to the other side of this point. Returning to Fig. 3a, the route region 26 has a tongue portion 30 at its end in which is defined a rectangular slot 32. The two leaf springs 24 overlap so that the respective slots 32 are aligned with one another. Further along the root region 26 is a lobed aperture 34 which is snapped over a moulded pip on the control housing in order to attach the leaf spring 24 to the housing. Passing from the root region 26 to the tip region 28, the width of the spring increases and a central, oval shape aperture 36 is defined. At the very end of the tip region 28 is a protruding finger portion 38 which receives a riveted contact member 40.

Fig. 3b shows the profile of the leaf spring 24 in one of its stable positions in which the curvature is exaggerated for clarity. The root region 26 is fixed to the control housing whilst the tip portion 28 is free to move. In the position shown in Fig. 3b, the spring has its concave side uppermost so that the contact member 40 at the tip of the spring is in an uppermost position. To move the spring to its other stable position shown in Fig. 3c, a force may either be applied in the root region 26 in the direction shown by the arrow A, i.e. against the convex side of the spring, or in the tip region 28 by a force in the direction of the arrow B i.e. against the concave side of the spring. Once the spring is in the other stable position shown in Fig. 3c, it may be returned to the original position by reversing the direction of the force applied as compared to what has just been described. It will be seen that in the second position shown in Fig. 3c, the contact member 40 at the tip is in a lower position than in Fig. 3b and therefore whilst in Fig. 3b it is biased into good electrical contact with a second contact member 42, in Fig. 3C the two contacts 40, 42 are separated and therefore the electrical circuit is broken. It will be seen therefore that the switch formed by the two contact members 40, 42 may be operated either in the root region 26 by a force applied in the opposite direction to the desired movement of the contact 40; or by applying a force in the tip region 28 in the same direction as the desired movement of the contact 40.

As a result of the geometry of the spring 24, the changing configuration brought about by the forces represented by arrows A, B, C and D are not identical. If a force is supplied as shown by arrow A or C, stress will build up in the spring to counter the inherent stress from its curvature until the spring snaps into its other configuration. This means that electrical contact between the two contact members 40, 42 is broken swiftly and cleanly. The same applies for the forces applied at the same point in the opposite direction to reclose the contact members 40, 42. However, if a force is applied as shown by arrows B or D to open or close the contacts, there will be some initial movement of the contact member 40 at the tip prior to the snap reversal of curvature into the opposite configuration. If this force were progressively applied therefore, problems such as arcing over a small contact gap or contact 'bounce' might be encountered. However, as will be seen later in the embodiments of the invention described herein, this portion of the leaf spring is acted upon by the push rod which is in turn acted upon by a snap-acting bimetallic actuator. A snap action is therefore given by the originating actuator and so the aforementioned problems do not arise.

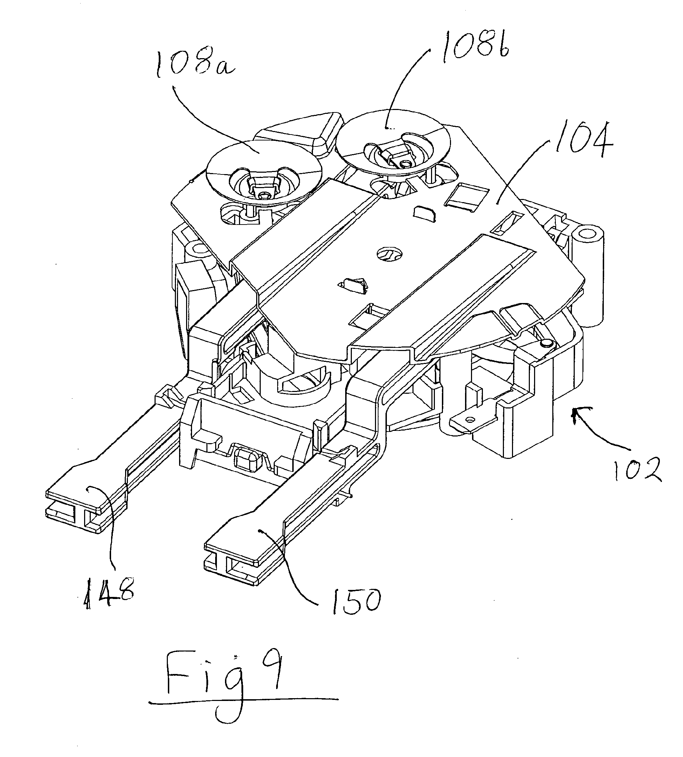

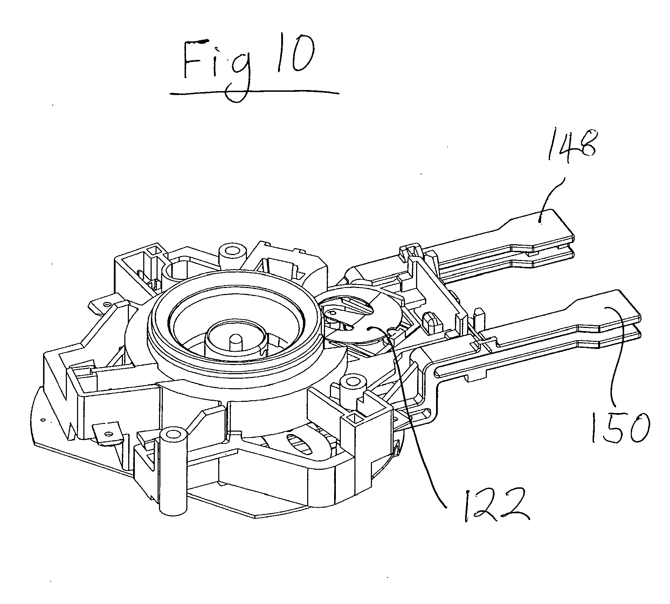

Figs. 4 and 5 show the main switching components of the control unit. In the centre of the Figure may be seen the two bistable leaf springs 24 described with reference to Figures 3a to 3c. The left-most leaf spring 24a (when view from Fig. 4) has a contact member 40a at its tip which bears against a fixed contact member 42a at the end of a terminal member 44a which terminates in a spade connector 46a which in use receives a spade connector from a flying lead connected to the main heating element. Similarly, the other leaf spring 24b is in electrical contact with a contact member 42b provided on a terminal member 44b. This has a spade terminal 46b for connecting a flying lead from the keep-warm element.

A pair of lever arms 48,50 pivoted at one end by means of pivot bases 51 extend over the respective leaf springs 24a,24b. Indeed, it can be seen from the underneath view of Fig. 5, each of the two levers 48,50 has a respective jaw member 52,54 which extends underneath the corresponding leaf spring 24. The leaf springs 24 therefore effectively pass between an open pair of jaws. Each lever 48,50 is acted on by an elongated U-shaped wire spring 56 each of which acts to bias its respective lever 48,50 to a central position in which either the main arm of the lever nor the lower jaw 52,54 touches the corresponding leaf spring 24. Although not shown the two levers 48,50 are mounted to a common know at the end distant from their pivot axis.

As will be seen from Fig. 4, one of the levers 48 has a laterally projecting nose 58 located just above the perimeter of the steam bimetal 22. Looking at Fig. 4, this means that when the steam bimetal 22 operates, thus snapping it so as to raise the perimeter, the lever 48 will be raised direction so that the jaw 52 of the lever 48 bears upwardly onto the root portion which will have the effect of snapping the leaf spring 24 to its other configuration separating the two contact members 40a,42a so breaking the electrical path between them. In order to restore contact between the contact members 40a,42a, the lever must be pressed down again, against the bias of its wire spring 56, so that the lever 48 itself presses against the upper side of the root portion and therefore snaps the leaf spring 24a back into the configuration shown in Figs. 4 and 5. It will also be appreciated that such manual depression of the lever 48 will have the effect of pressing the perimeter of the steam bimetal 22 back towards the configuration shown in Figs. 4 and 5, i.e. the steam bimetal 22 is forcibly reset. Of course, rather than being moved automatically by the steam bimetal 22, the lever 48 could instead be lifted manually in order to open the contacts 40a,42a.

As they are coupled together, the other lever 50 will also be lifted up opening the other pair of contacts 40b,42b. These are reclosed by the same lever 50 being pressed down so that the jaw member 54 acts on the underside of the leaf spring 24B. In both cases, the levers are moved against a spring bias from the wire springs 56 to press on the leaf spring and are then returned by the spring bias to their central position where the levers are not in contact with the leaf spring.

Although omitted from Figs. 4 and 5, the annular neutral conductor 18 of the 360° connector engages with the two bistable leaf springs 24a,24b by means of a tab which extends from the annular conductor through the rectangular slots 32 in the root ends of the leaf springs, the tab being folded over after it has passed through these slots in order to secure them. The two leaf springs 24a,24b are thus in electrical contact with the neutral side of the mains electrical supply.

One part of the 360° connector which is visible in Figs. 4 and 5 is the central, live pin 20. The top end of the live pin 20 is pressed into a hole formed in one arm of a right-angled conducting member 60. The conducting member 60 is mounted to the housing of the control unit so that its other arm 60a bears resiliently onto the end edge of an inclined conductor 62 which is in turn formed integrally with a spade connector 64. This is connected in use to one end of both the main and keep-warm elements.

Although electrical contact between the two conductors 60a;62 may be broken by deflecting the former further upwardly against its resilient bias, no special surface treatment is necessary on either conductor since they will remain biased together in firm electrical contact under all operating circumstances of the control unit except in the extremely unlikely event of a serious overheating of the heater protected by the control unit as will be appreciated from below.

The distal end of the arm 60a of the live conductor member is bent upwardly in a dog-leg fashion to form an end platform 66. The end platform 66 is vertically aligned with, but offset from, a tab 68 which extends laterally from a thermal fuse member 70. The thermal fuse member is made of a plastics material, e.g. nylon, which is designed to soften in the event that it experiences a temperature associated with serious overheating of an electric heater. It comprises a central shaft portion 72 which has a waisted section 72A towards its front end. A collar 74 is provided around the shaft 72 approximately half way along its length and the tab 68 extends from this collar.

When the control unit is fully assembled, the thermal fuse member 70 is disposed in a cylindrical chamber 76 (see Fig. 2) and a compression coil spring (not shown) is provided between the base of the chamber 76 and the collar 74 of the fuse member in order to give an upward biasing force on the thermal fuse member 70.

In ordinary use the biasing force on the thermal fuse 79 is resisted by the end of the thermal fuse member 70 bearing against the heater plate as will be appreciated by considering Fig. 1. However, in the event that the heater should seriously overheat, the front end of the shaft 72, and in particular the waisted section 72a will begin to soften and no longer be able to resist the biasing force. The thermal fuse member will therefore be driven forward by the biasing force of the spring which will cause the lateral tab 68 to catch the end platform 66 of the live conductor member 60 and therefore pull it away from the end edge of the inclined conductor member 62, thereby breaking electrical contact between them. Since this breaks the electrical path from the live side of the mains supply to both of the heaters, this will cause all heating to cease. It will be appreciated that although this will ultimately prevent the heater from becoming too dangerous, it will render the control unit inoperable. It is therefore intended only as backup protection in the event that primary overheat protection should fail.

Turning to Figure 6, the primary overheat protection bimetallic actuators 8 may be seen. In the event of either bimetal 8 sensing a temperature indicative of one of the elements overheating, it will reverse its curvature in a snap action and so press downwardly on the respective push rod 12. As may now be seen from Fig. 7, the push rods 12 press against the root portions of the two respective bistable leaf springs 24a, 24b. Although not actually visible in Fig. 7, the point of contact is illustrated on the underside of the springs using the reference numeral 78. It will be seen therefore that if either bimetal 8 should operate it will press the corresponding leaf spring 24a,24b into its opposite configuration in which its respective contact member 40a,40b is moved away from its fixed contact, thereby breaking the electrical path.

Although omitted from the Figures for clarity, a standard lift-off switch-off (LOSO) sprung pin is associated with the cordless connector so that if the two parts of the connector are separated the pin will be allowed to emerge from a position flush with a surface of the connector. This movement is transmitted to the main lever 48 such as to tip it off, so opening the contacts 40a,42a. The coil spring 79 operating the LOSO pin is just visible in Fig. 2.

Operation of the control unit will now be described with reference to the schematic circuit diagram of Figure 8. Operation is commenced initially by pressing down on the two levers 48,50 by pressing on the common knob to which they are coupled. This will have the effect of causing the main arms of the levers 48,50 to press downwardly onto the root portions of the respective bistable leaf springs 24a,24b thus snapping them into the 'contacts closed' configuration shown in Figs. 4 and 5 if they are not already in that configuration. As may be seen in Fig. 8, this will cause both the main e.g. 3 kW heatering element 80 and the keep warm e.g. 60 w heating element 82 to be energised. The main element will heat water in the vessel to boiling thus generating steam which is conducted down to the steam bimetal 22.

When the steam bimetal 22 operates, it lifts up the associated lever 48 which causes the jaw portion 52 thereof to press on the root portion of one of the bistable leaf springs 24a thus opening the associated contacts 40a,42a. This has the effect of disconnecting the main element 80 thereby leaving only the lower power keep-warm element 82 in the circuit. The keep-warm heater 82 has a power of approximately 60 watts which is sufficient to maintain water in the vessel at approximately 80-85° which is the ideal temperature for brewing coffee.

The water will be heated by the keep-warm element 82 indefinitely until either all of the water evaporates and the heater begins to overheat or the user switches the appliance off. In the former case, one or both of the overheat protection bimetals 8 will operate. If the right-most bimetal (as seen from Fig. 1) should happen to operate first, this will not disconnect the keep-warm element 82 since the contact 40a,42a associated with this bimetal have already been opened by the steam bimetal. However, the other overheat protection bimetal 8 will operate shortly thereafter to open the keep-warm contacts 40b,42b. Even if there is such a slight delay, this is not a serious situation because the power of the keep-warm element is too low to be of any significant danger.

Normally, however, the user will switch off the keep warm heater manually by lifting up the common operating knob which will tilt both levers 48,50 upwardly, pressing on both root portions of the bistable leaf springs 24a,24b with the respective jaw members 52,54. This will cause both sets of contacts 40a,42a; 40b,42b to snap open if they are not already open. The control will thus have been returned to the off state from which it may be switched on again as described above.

If the appliance to which the control is fitted is lifted from its cordless base, the LOSO pin (not shown) will no longer hold the arm of the coil spring 79 away from the lever 48 and the coil spring arm will therefore tilt the lever 48 upwardly opening the main element contacts 40a,42a. Thus if the vessel is lifted up during the initial boiling phase, the main element 80 will remain switched off when the vessel is replaced unless the user manually switches it back on using the actuating knob. However, if the vessel if lifted while only the keep-warm element 82 is energised, this will not be switched off and therefore it will be energised again once the vessel is replaced. This allows the hot water in the vessel to be used to make a beverage but continue to be warmed when the vessel is replaced without the user having to remember to switch the keep-warm element back on.

As previously described, if the vessel should boil dry or be operated without any water in and both of the bimetallic actuators 8 or their associated contacts 40a,42a; 40b,42b should fail to operate, the temperature of the vessel will continue to rise until the thermal fuse 80 begins to soften which will allow it to be moved forward by the coil spring thus permanently disconnecting the live side of the electrical supply to both of the elements 80,82.

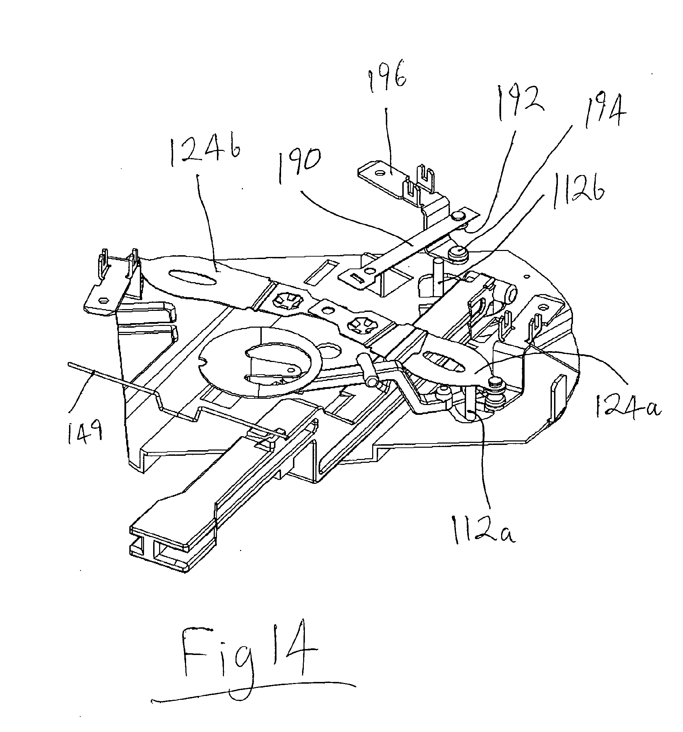

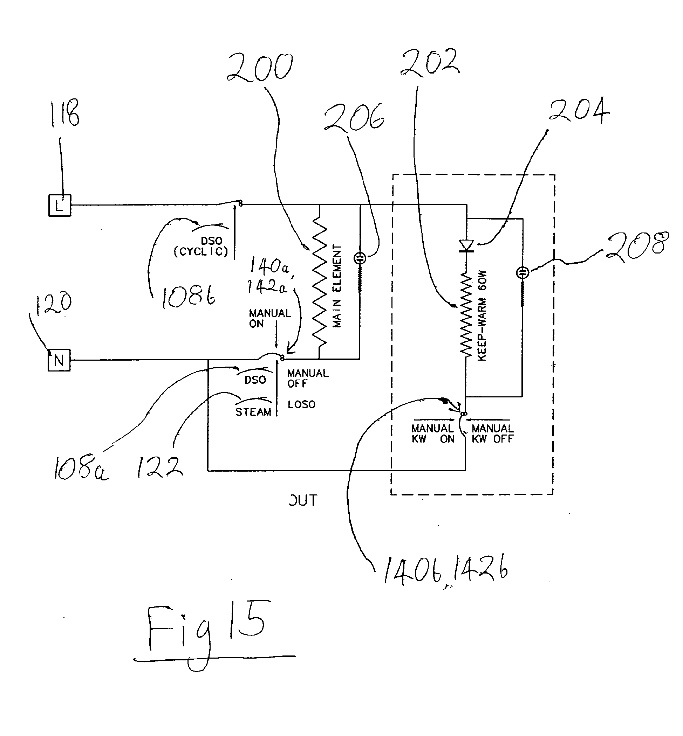

A further embodiment of the invention will now be described with reference to Figures 9 to 15. Figs. 9 and 10 show perspective views from above and below of the further embodiment. Many of the features are the same as in the first embodiment and their description is not repeated. The view from above in Fig. 9 shows the plastics body moulding 102, the metal mount plate 104 and two overheat protection bimetals 108a, 108b. It will be observed that these bimetals 108a, 108b are closer together than in the first embodiment and do not straddle the axis of the control parallel to the lever arms 148, 150; rather the line joining the bimetals is at an angle to this axis. The lever arms 148,150 are coupled together by a wire spring 149. Referring to the view from beneath in Fig. 10, it may be seen that the steam bimetal 122 is provided on this axis defined by the levers 148, 150 and is located between them. Another difference which may be seen is that there is no thermal fuse in this embodiment.

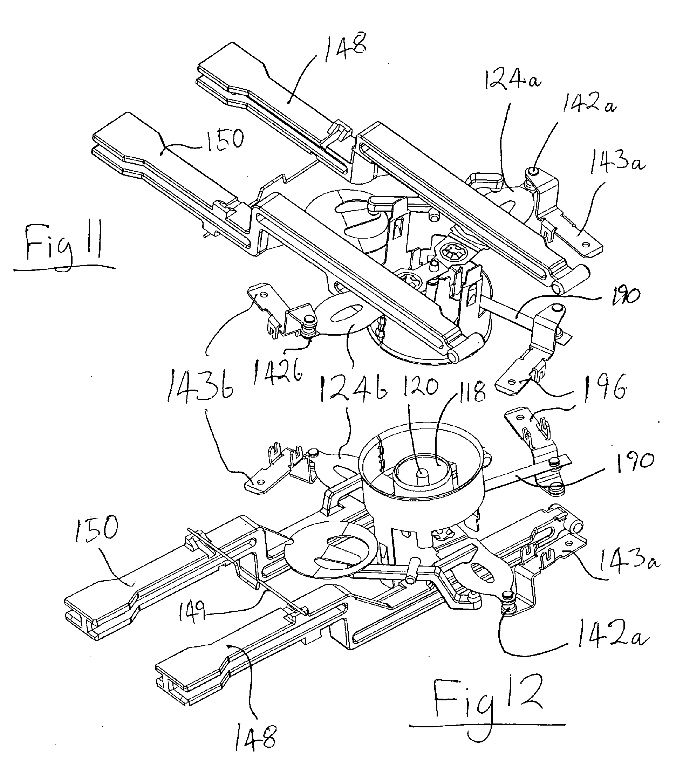

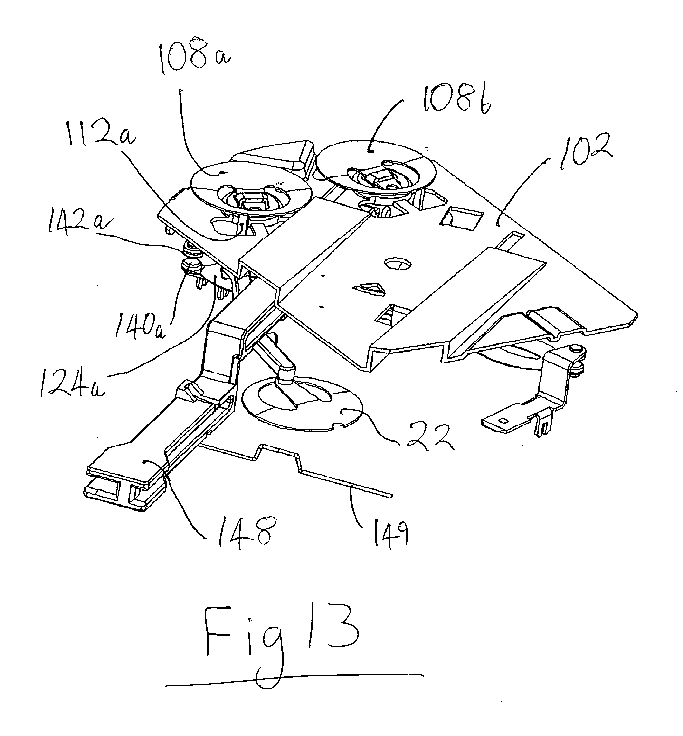

Figs. 11 to 14 show the main switching mechanisms. As in the previous embodiment two bistable leaf springs 124a, 124b are provided which can hold open or closed corresponding contacts 140a, 142a; 140b, 142b. The rightmost fixed contact 142a as viewed from Figs. 11 and 12 is connected to a spade terminal 143a for receiving a flying lead from the main heating element. The leftmost fixed contact 142b is connected to a spade terminal 143b for receiving a flying lead from the keep-warm heating element.

Also in common with the first embodiment the root portions of the springs 124a, 124b pass through gaps defined between the respective lever arms 128, 150 and jaw members 52, 54 which depend from them so that each lever arm 148, 150 can be pivoted in either direction to press on the root portion of the associated spring 124a, 124b in either direction.

However unlike the previous embodiment only one of the bistable leaf springs 124a is acted on by one of the overheat protection bimetals 108a via its associated push rod 112a. The other bimetal 108b acts via its associated push rod 112b on an ordinary leaf spring 190 which is mounted in cantilever fashion at one end and carries a contact 192 at the other, free end. In the rest position of the spring 190, its contact 192 is biased against a fixed contact 194 which is electrically connected to a spade terminal 196. When the associated bimetal 108 operates however, it presses the leaf spring 190 against its resilience so that the two contacts 192, 194 move apart.

When the control unit is installed the spade terminal 196 receives a flying lead connected to both the main and keep-warm heating elements.

The leaf spring 190 described above is electrically connected to the intermediate annular terminal member 118 of the 360 degree cordless connector. However in this embodiment the corresponding female part of the connector (not shown) on the cordless base is wired differently so that this intermediate terminal 118 carries the live pole of the mains supply and the central pin 120 carries the neutral pole. The live and neutral are thus reversed compared to the first embodiment.

The central, neutral pin 120 is electrically connected to the two bistable leaf springs 124a, 124b. The two bistable leaf springs 124a, 124b thus switch the neutral pole to the main and keep warm elements respectively.

A final difference over the first embodiment exhibited by that now being described is that the steam bimetal 122 does not act on one of the lever arms but rather it acts on a dedicated, centre-pivoted rocker arm 198. Thus when the steam bimetal 122 operates in the presence of steam, it presses on the rocker arm which in turn presses on the tip portion of the bistable leaf spring 124a to snap its contact 140a away from the corresponding fixed contact.

Operation of the embodiment described above will now be explained with reference to the schematic circuit diagram of Fig. 15. Broadly speaking the circuit comprises a main heating element 200, e.g. a 3 kW sheathed element capable of rapidly heating water to boiling, in parallel with a keep-warm heater 202, e.g. a 60 W sheathed heater for maintaining water at about 85 degrees Celsius. Since it is impractical with current production methods to make a sheathed element of practical size with such a low power, a diode 204 is provided in series with it in order to give half-wave rectification. The keep-warm element can therefore in fact be rated at 120 W at say 240 V (e.g. for the UK) but is only run at half its normal power. In series with each element is a neon indicator 206, 208 which indicates when that element is energised. The keep-warm element 202 is not essential in accordance with all aspects of the invention and so could be omitted. To initiate use the two lever arms 148, 150 are pressed down against their bias to ensure that the two bistable leaf springs 124a, 124b are in their contacts-closed positions so that both the main and keep-warm elements 200, 202 are energised. Water in the vessel will therefore be heated to boiling. When the resultant steam is sensed by the steam bimetal 122, it will operate, pressing down on one end of the rocker arm and so pressing up against the bistable leaf spring 124a, opening the contacts 140a, 142a. This de-energises the main element 200, leaving just the keep-warm element 202 in circuit. The water will therefore be maintained at about 85 degrees Celsius which is ideal for brewing coffee.

If the vessel should be lifted from its cordless base during the keep-warm phase, the keep-warm element 202 will still be energised when it is replaced since the lift-off switch-off sprung pin (not shown) acts on the lever 148 associated with the main element contacts 140a, 142a. If the user should wish to reboil the water, the lever arms 148, 150 can simply be pressed down again to close the main element contacts 140a, 142a by means of the lever 148 acting on the bistable leaf spring 124a.

If at any stage either heater should be energised without any water in the vessel, the heated vessel base will begin to overheat which will be sensed by one or both overheat bimetals 108a, 108b. Depending on which operates first this may open the main element contacts 140a, 142a or the common live pole contacts 192, 194. If the former are opened first the main element 200 will be latched off by the bistable leaf spring 124a. If it is the latter, the contacts 192, 194 will eventually reclose when the bimetal resets since the leaf spring 190 is not bistable, hence one or both of the elements will cycle on and off but within a safe range.

It will be appreciated by those skilled in the art that many variations on the specific embodiments described above are encompassed within the scope of the various aspects of the invention set out. For example the control unit need not be employed in a water boiling vessel but could instead by in a beverage makes such a as a coffee maker, or other liquid heating application. The bistable leaf spring described may have many varied applications, not just in a control unit for a liquid heating vessel.

## Claims

1. A liquid heating vessel comprising main heating means arranged to heat water in the vessel to boiling and thereafter to be automatically de-energized and secondary heating means for maintaining water in the vessel at a temperature at or below boiling wherein the vessel comprises a single manually operable actuator for energising said main heating means and also for de-energising said secondary heating means.

2. A control arrangement for a liquid heating vessel having main heating means for heating water to boiling and secondary heating means for maintaining water at a temperature at or below boiling, said control arrangement being arranged to de-energise the main heating means automatically after boiling of the water, wherein the control arrangement comprises a single manually operable actuator for energising the main heating means and also for de-energising said secondary heating means.

3. A control arrangement as claimed in claim 2, comprising an integrated control unit,

4. A liquid heating vessel or control arrangement as claimed in any preceding claim wherein the manual actuator is operable in opposite directions to energise the main heating means and de-energise the secondary heating means respectively.

5. A liquid heating vessel or control arrangement as claimed in claim 4 wherein the actuator has at least one unstable position corresponding to one or both of energising the main heating means and de-energising the secondary heating means respectively.

6. A liquid heating vessel or control arrangement as claimed in any preceding claim wherein the actuator is pivoting.

7. A leaf spring comprising a root region for mounting the spring and a narrower, free tip region, said spring having two stable curved positions such that it is moveable between said positions by application of a force to the concave face in the tip region or to the convex face in the root region.

8. A leaf spring as claimed in claim 7 which is elongate.

9. A leaf spring as claimed in claim 7 or 8 adapted to act as an electrical contact.

10. A leaf spring as claimed in claim 9 comprising a narrower protruding portion mounting or forming the electrical contact.

11. A leaf spring as claimed in any of claims 7 to 10 comprising a laminar blank which is domed in two opposite directions.

12. A leaf spring as claimed in claim 11 which is domed by equal amounts in the two opposite directions.

13. A leaf spring as claimed in claim 11 or 12 having a curvature in each direction which is at least part spherical.

14. A leaf spring as claimed in claim 11, 12 or 13 which is curved through an angular extent of less than 90°, more preferably less than 60° and most preferably less than 45°.

15. A leaf spring as claimed in any of claims 7 to 14 comprising a central cut-out portion.

16. A liquid heating vessel or control arrangement as claimed in any of claims 1 to 6 comprising a set of electrical contacts in the electrical supply to said main or secondary heater, said set of contacts comprising a leaf spring as claimed in any of claims 7 to 15.

17. A liquid heating vessel or control arrangement as claimed in claim 16 wherein the sets of electrical contacts in the supplies to both the main and secondary heater respectively each comprise a leaf spring as claimed in any of claims 7 to 15.

18. A liquid heating vessel or control arrangement as claimed in claim 16 or 17 wherein said leaf spring(s) is are mounted in a cantilever fashion by the or their root region(s).

19. A method of making a spring comprising providing a laminar blank, pressing said blank in a first direction against a curved forming means and thereafter pressing said blank in a second direction, opposite said first direction, against said curved forming means or a further curved forming means.
